# EUROPEAN PATENT SPECIFICATION

(11) **EP 4 307 074 B1**
(45) Date of publication and mention of the grant of the patent: **29.04.2026**
(21) Application number: 22791467.8
(22) Date of filing: 24.03.2022
(51) Int. Cl.: G05D 23/19, F25D 17/02

(54) **TEMPERATURE ADJUSTMENT DEVICE**
TEMPERATUREINSTELLUNGSVORRICHTUNG
DISPOSITIF DE RÉGLAGE DE TEMPÉRATURE

(30) Priority: 21.04.2021 JP 2021071970
(43) Date of publication of application: 17.01.2024
(73) Proprietor: SMC Corporation, Tokyo 104-0031 (JP)
(72) Inventor: ADACHI Makoto, Ibaraki 300-2493 (JP)
(74) Representative: Keil & Schaafhausen Patentanwälte PartGmbB
(86) International application number: PCT/JP2022/013820
(87) International publication number: WO 2022/224690

(56) References cited:
- JP-A- 2008 292 026
- JP-A- 2019 191 841
- JP-A- H11 294 927
- JP-B2- 2 691 001
- JP-B2- 2 816 054
- US-A- 5 914 885
- US-A1- 2008 314 564
- US-A1- 2020 318 861

## Description

### Technical Field

The present invention relates to a temperature adjustment device that supplies temperature-controlled circulating liquid to a load to adjust the temperature of the load to a target temperature.

### Background Art

As disclosed in, for example, JP 2007 - 101 006 A, a generally known temperature adjustment device supplies temperature-controlled circulating liquid to a load to adjust the temperature of the load to a predetermined target temperature. A related-art temperature adjustment device of this type typically includes a circulating liquid circuit through which the circulating liquid is circulated between the device and a load and a temperature controller that controls the temperature of the circulating liquid to adjust the temperature of the load to the target temperature.

Nowadays, such temperature adjustment devices are used in different fields. For example, a beer manufacturing process may involve cooling raw material liquid in a tank to a predetermined target temperature through such a temperature adjustment device. In this case, there is a demand to gradually cool the raw material liquid in the tank to the target temperature while adjusting the temperature of the raw material liquid.

In the related-art temperature adjustment device, however, the temperature controller controls the temperature of the circulating liquid so that the temperature of the load can be adjusted to the target temperature as quickly as possible. It is therefore difficult to gradually change the temperature of the load (i.e., the raw material liquid for beer) to the target temperature while adjusting the temperature of the load as described above. Achieving such load temperature adjustment inevitably involves a complicated operation of temperature adjustment, for example, changing the temperature of a load to a final target temperature in a stepwise manner while resetting a set temperature in a temperature adjustment device at predetermined time intervals, or several times.

US 2020/318861 A1 discloses a temperature controller configured to control a heater and a cooling pump based on the temperature of a circulating liquid flowing through a discharge flow path and a return flow path to adjust the temperature of the circulating liquid supplied to a load.

US 5 914 885 A discloses a heat treatment device that adjusts the temperature of an atmosphere gas in a heat treatment chamber based on a heating profile having a predetermined temperature gradient.

US 2007/314564 A1 discloses a temperature control device controlling the temperature of a controlled object by circulating a fluid in a temperature adjustment unit arranged near the controlled object. The temperature control device comprises a heating pathway that heats and circulates the fluid in the temperature adjustment unit, a cooling pathway that cools and circulates the fluid in the temperature adjustment unit, a bypass pathway that does not pass the fluid through the heating pathway and cooling pathway, but circulates the fluid in the temperature adjustment unit, and adjustment means that adjust a flow ratio of the fluid that is supplied from the heating pathway, cooling pathway, and bypass pathway to the temperature adjustment unit via a confluence unit that combines these flows. The adjustment means are provided on a downstream side of each of the heating pathway, the cooling pathway, and the bypass pathway and on the upstream side of the confluence unit.

### Summary of Invention

### Technical Problem

A technical problem of the present invention is to provide a temperature adjustment device capable of gradually changing the temperature of a load to a target temperature while adjusting the temperature of the load to the target temperature in the middle of temperature adjustment.

### Solution to Problem

This problem is solved by the temperature adjustment device according to claim 1, the temperature adjustment device according to claim 2, the method for adjusting a temperature of a load according to claim 8, and the method for adjusting a temperature of a load according to claim 9.

Preferred embodiments of the invention are evident from the dependent claims.

In the temperature adjustment device, preferably, the circulating liquid circuit includes a return passage through which the circulating liquid returned from the load is received, a discharge passage through which the circulating liquid subjected to temperature adjustment by the heating unit and the cooling unit is delivered to the load, a tank unit connected to the return passage and the discharge passage and configured to store the circulating liquid, and a circulation pump configured to deliver the circulating liquid in the tank unit to the discharge passage.

Preferably, the cooling unit includes a heat-dissipating water circuit through which heat-dissipating water flows and a heat exchanger configured to exchange heat between the heat-dissipating water flowing through the heat-dissipating water circuit and the circulating liquid flowing through the circulating liquid circuit, the heating unit includes a heater, the heat-dissipating water circuit includes a flow control valve configured to adjust a flow rate of the heat-dissipating water flowing through the heat-dissipating water circuit, and the control output unit controls the output of the heating unit and the output of the cooling unit by controlling the heater and the flow control valve.

In the temperature adjustment device, the arithmetic unit may calculate a time-dependent set temperature of the load from the target temperature gradient at each of a plurality of timings within the target reach time period and compare the time-dependent set temperature with the measured temperature of the load inputted from the measurement input unit, and the control output unit may control, based on a result of comparison between the time-dependent set temperature and the measured temperature, the output of the heating unit and the output of the cooling unit. Or alternatively, the arithmetic unit may calculate a time-dependent set temperature of the circulating liquid from the target temperature gradient at each of a plurality of timings within the target reach time period and compare the time-dependent set temperature with the measured temperature of the circulating liquid inputted from the measurement input unit, and the control output unit may control, based on a result of comparison between the time-dependent set temperature and the measured temperature, the output of the heating unit and the output of the cooling unit.

### Advantageous Effects of Invention

According to the present invention, there can be provided a temperature adjustment device capable of gradually changing the temperature of a load to a target temperature while adjusting the temperature of the load to the target temperature during a process of temperature adjustment.

### Brief Description of Drawings

[Fig. 1] Fig. 1 is a schematic circuit diagram of a temperature adjustment device according to an embodiment of the present invention.
[Fig. 2] Fig. 2 is a block diagram illustrating a controller in Fig. 1.
[Fig. 3] Fig. 3 is a flowchart of control by the controller in Fig. 1.
[Fig. 4] Fig. 4 is a graph illustrating an exemplary change over time in time-dependent set temperature for a target reach time period in the temperature adjustment device of Fig. 1.

### Description of Embodiments

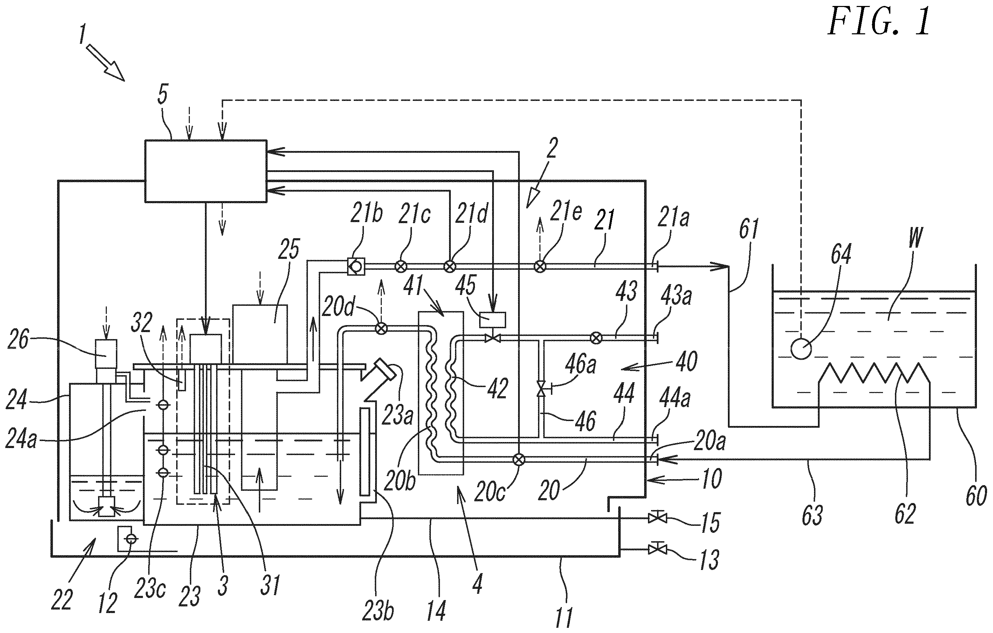

Figs. 1 to 4 illustrate a temperature adjustment device according to a first embodiment of the present invention. The temperature adjustment device, 1, is suitable particularly to gradually change the temperature of a temperature adjustment target (load W, such as raw material liquid for beer) to a target temperature while performing temperature adjustment (i.e., temperature control).

As illustrated in Fig. 1, the temperature adjustment device 1 includes a housing 10, serving as an outer casing of the device 1. The temperature adjustment device 1 includes, in the housing 10, a circulating liquid circuit 2 configured to receive circulating liquid returned from a load W after heat exchange with the load W and again cyclically deliver the received circulating liquid to the load W, a heating unit 3 located in the circulating liquid circuit 2 and configured to heat the circulating liquid in the circulating liquid circuit 2, a cooling unit 4 located in the circulating liquid circuit 2 and configured to cool the circulating liquid in the circulating liquid circuit 2, and a controller 5 configured to control an output of the heating unit 3 and an output of the cooling unit 4.

The circulating liquid circuit 2 includes a return passage 20 through which the circulating liquid returned from the load W after heat exchange with the load W is received, a discharge passage 21 through which the circulating liquid subjected to temperature adjustment by the heating unit 3 and the cooling unit 4 is delivered to the load W, a tank unit 22 disposed between the return passage 20 and the discharge passage 21 to store the circulating liquid, and a circulation pump 25 to deliver the circulating liquid stored in the tank unit 22 to the discharge passage 21.

The tank unit 22 includes a main tank 23, which is connected to the return passage 20 and the discharge passage 21, and a subtank 24 connected to an upper portion of the main tank 23 through a communication port 24a. The main tank 23 has an inlet 23a, through which the circulating liquid is fed to the tank unit 22, and a level gauge 23b, which enables the amount of circulating liquid stored in the main tank 23 to be visible to the outside of the housing 10.

The main tank 23 includes the heating unit 3, the circulation pump 25, and a level switch 23c, which detects the level of the circulating liquid stored in the tank 23. For the circulation pump, an immersion type inverter pump is preferably used. The heating unit 3, the circulation pump 25, and the level switch 23c are electrically connected to the controller 5. Furthermore, the heating unit 3 includes a heater 31 and a thermal fuse 32, which are electrically connected to the controller 5. The heater and the thermal fuse are electrically connected to the controller 5.

Such a configuration allows the heater 31 to heat the circulating liquid in the main tank 23 so as to adjust the temperature of the circulating liquid, and allows adjustment of the flow rate of the circulating liquid delivered to the discharge passage 21. The thermal fuse 32 allows the temperature adjustment device 1 to be, for example, turned off in response to determination that the device is in a dangerous condition, for example, when the temperature of air in the main tank 23 is higher than a predetermined temperature. The bottom of the tank unit 22 is connected to one end of a drain pipe 14. The other end of the drain pipe 14 has a drain port 15, which can be opened or closed. Thus, the circulating liquid in the tank unit 22 can be discharged to the outside, for example, when the inside of the tank unit 22 is cleaned.

The subtank 24 includes an immersion type internal pump 26 to draw the circulating liquid stored in the subtank to the main tank 23. For the internal pump 26, an inverter pump is preferably used. The internal pump 26 is electrically connected to the controller 5. In such a configuration, an excess of circulating liquid that exceeds a maximum capacity of the main tank 23 can be discharged to the subtank 24 through the communication port 24a and be stored in the subtank 24. Furthermore, when the level switch 23c detects a reduction in liquid level in the main tank 23, the circulating liquid in the subtank 24 can be drawn by the internal pump 26 to refill the main tank 23.

The return passage 20 has, at its one end, a circulating liquid return port 20a formed in the housing 10. The other end of the return passage 20 is connected to the main tank 23. Furthermore, the return passage 20 includes a first heat exchange passage 20b, through which the circulating liquid flowing therethrough exchanges heat with the cooling unit 4, located between the one end and the other end. Such a configuration allows the circulating liquid received through the return port 20a to be cooled in the first heat exchange passage 20b by the cooling unit 4 and then be returned to the main tank 23.

In the return passage 20, a first temperature sensor 20c, which detects the temperature of the circulating liquid received through the circulating liquid return port 20a, is located between the return port 20a and the first heat exchange passage 20b, and a second temperature sensor 20d, which detects the temperature of the circulating liquid cooled by the cooling unit, is located between the first heat exchange passage 20b and the main tank 23. Both the first temperature sensor 20c and the second temperature sensor 20d are electrically connected to the controller 5.

Therefore, as will be described later, the first temperature sensor 20c can be used to control the outputs of the heating unit 3 and the cooling unit 4 through the controller 5 based on a target set temperature Ta previously set by a user. In addition, for example, both the sensors 20c and 20d can be used to detect an abnormal temperature of the circulating liquid and stop the temperature adjustment device 1 in response to the detection and to control the output of the cooling unit 4 based on the difference between the temperatures of the circulating liquid detected by the sensors 20c and 20d.

The discharge passage 21 has, at its one end, a circulating liquid discharge port 21a formed in the housing 10. The other end of the discharge passage 21 is connected to the circulation pump 25. Such a configuration allows the circulating liquid cooled by the cooling unit 4 in the return passage 20 and heated by the heating unit 3 (heater 31) in the main tank 23 to be supplied to the circulating liquid discharge port 21a through the discharge passage 21.

The discharge passage 21 has a check valve 21b, which prevents backflow of the circulating liquid in a direction from the circulating liquid discharge port 21a to the circulation pump 25. In the discharge passage 21, a pressure sensor 21c, a third temperature sensor 21d, and a flow meter sensor 21e are sequentially arranged in that order from an upstream side between the check valve 21b and the discharge port 21a. These sensors 21c, 21d, and 21e are also electrically connected to the controller 5.

In such a configuration, for the pressure sensor 21c and the flow meter sensor 21e, for example, the number of revolutions of the circulation pump 25 can be controlled based on the pressure and flow rate of the circulating liquid detected by these sensors. For example, an abnormal pressure of the circulating liquid and an abnormal flow rate thereof can be detected, and the temperature adjustment device 1 can be stopped in response to the detection. Furthermore, as will be described later, the third temperature sensor 21d can be used to control the outputs of the heating unit 3 and the cooling unit 4 through the controller 5 based on the target set temperature Ta previously set by the user. In addition, the third temperature sensor 21d can also be used, for example, to detect an abnormal temperature of the circulating liquid and stop the temperature adjustment device 1 in response to the detection and to control the outputs of the heating unit 3 and the cooling unit 4 based on the difference between the temperature of the circulating liquid detected by the third temperature sensor 21d and that detected by the first temperature sensor 20c or the second temperature sensor 20d.

In the present embodiment, the cooling unit 4 includes a heat-dissipating water circuit 40, through which heat-dissipating water flows, and a heat exchanger 41, which exchanges heat between the heat-dissipating water flowing through the heat-dissipating water circuit 40 and the circulating liquid flowing through the return passage 20. Specifically, the heat-dissipating water circuit 40 includes a second heat exchange passage 42 located in the heat exchanger 41, a heat-dissipating water introduction path 43, which is connected to one end of the second heat exchange passage 42 and through which the heat-dissipating water is introduced into the heat exchanger 41, and a heat-dissipating water discharge path 44, which is connected to the other end of the second heat exchange passage 42 and through which the heat-dissipating water subjected to heat exchange with the circulating liquid in the heat exchanger 41 is discharged from the heat exchanger 41.

Furthermore, the heat-dissipating water circuit 40 has a flow control valve 45 to adjust the flow rate of the heat-dissipating water to be supplied to the second heat exchange passage 42. The flow control valve 45 is electrically connected to the controller 5. The controller 5 controls the flow control valve 45, thus controlling the flow rate of the heat-dissipating water to be supplied to the second heat exchange passage 42, or the output of the cooling unit 4.

More specifically, the heat-dissipating water introduction path 43 is connected at its one end to an upstream end of the second heat exchange passage 42 and has, at the other end, a heat-dissipating water supply port 43a formed in the housing 10. The heat-dissipating water introduction path 43 has the flow control valve 45 between the supply port 43a and the second heat exchange passage 42. The heat-dissipating water discharge path 44 is connected at its one end to an outlet end of the second heat exchange passage 42 and has, at the other end, a heat-dissipating water discharge port 44a formed in the housing 10.

For the flow control valve 45, for example, a proportional valve or a solenoid valve can be used. For the proportional valve, controlling the opening degree of the valve can control the flow rate of the heat-dissipating water to be supplied to the second heat exchange passage 42, or the output of the cooling unit 4. For the solenoid valve, controlling the ratio of open time to closed time of the valve can control the flow rate of the heat-dissipating water to be supplied to the second heat exchange passage 42, or the output of the cooling unit 4.

In the heat-dissipating water circuit 40, a position upstream of the flow control valve 45 (adjacent to the heat-dissipating water supply port 43a) in the heat-dissipating water introduction path 43 is connected to the heat-dissipating water discharge path 44 by a bypass path 46. The bypass path 46 has a gate valve 46a. The gate valve 46a can be closed or opened as necessary. For example, the gate valve 46a can be opened to reduce the temperature of the heat-dissipating water heated through the second heat exchange passage 42 and then discharge the water or to reduce a phenomenon called water hammer in the flow control valve 45.

The bottom of the housing 10 has a drain pan 11 to receive leaked circulating liquid or heat-dissipating water. The drain pan 11 has a float type leakage sensor 12 electrically connected to the controller 5 and a drain port 13, which can be closed or opened to discharge liquid accumulated on the drain pan 11 to the outside. In such a configuration, for example, when the leakage sensor 12 detects leakage of a large amount of circulating liquid or heat-dissipating water in the device 1, the controller 5 can provide notification of the leakage, or alternatively, the device 1 can be turned off.

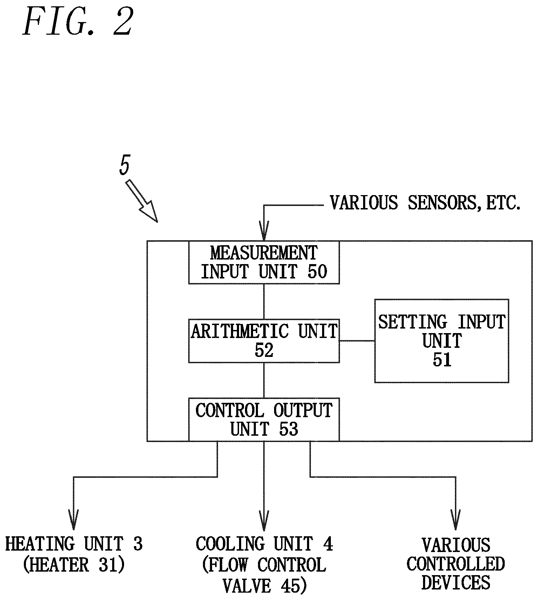

As illustrated in Fig. 2, the controller 5 includes a measurement input unit 50, to which results of detection by various sensors, etc. including the temperature sensors are inputted, a setting input unit 51, to which various set values including the target set temperature Ta, which will be described later, are inputted, an arithmetic unit 52, which performs a predetermined arithmetic based on various pieces of data inputted from the measurement input unit 50 and the setting input unit 51, and a control output unit 53, which outputs control signals to various controlled devices including the heater 31 of the heating unit 3 and the flow control valve 45 for the cooling unit 4 on the basis of a result of arithmetic by the arithmetic unit 52.

How to use the temperature adjustment device 1 will now be described. In the following description, it is assumed that the temperature adjustment device 1 is used to adjust a liquid load (liquid, such as raw material liquid for beer in a tank 60) W to a target temperature.

To connect the temperature adjustment device 1 to the load W, as illustrated in Fig. 1, one end of a supply pipe 61 to supply the circulating liquid to the load W is connected to the circulating liquid discharge port 21a of the temperature adjustment device 1, and the other end thereof is connected to an inlet of a heat exchange member (specifically, a heat exchange pipe immersed in the liquid load W in the tank 60) 62 for heat exchange with the load W. One end of a return pipe 63 to return the circulating liquid subjected to heat exchange with the load W to the temperature adjustment device 1 is connected to an outlet of the heat exchange member 62, and the other end of the return pipe 63 is connected to the circulating liquid return port 20a of the temperature adjustment device 1. Furthermore, a load temperature sensor 64 disposed in contact with the load W (specifically, immersed in the liquid load W in the tank 60) is electrically connected to the measurement input unit 50 of the controller 5 as necessary.

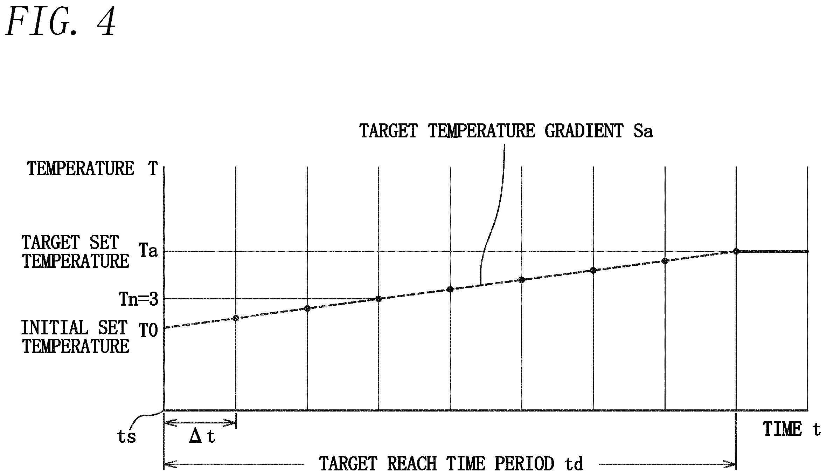

How to control the temperature adjustment device 1 in adjusting the temperature of the load W to the target temperature will now be described with reference to Figs. 2 to 4. A case where the load W is adjusted to the target temperature based on the temperature of the load W measured by the load temperature sensor 64 and a case where the temperature of the load W is adjusted to the target temperature based on the temperature of the circulating liquid measured by the first temperature sensor 20c or the third temperature sensor 21d will be described. The latter case is on the assumption that the temperature of the load W substantially follows the adjusted temperature of the circulating liquid. In the following description, for example, it is assumed that the load W is adjusted to a target temperature higher than the current temperature of the load W, as illustrated in Fig. 4.

### <Using Load Temperature Sensor 64>

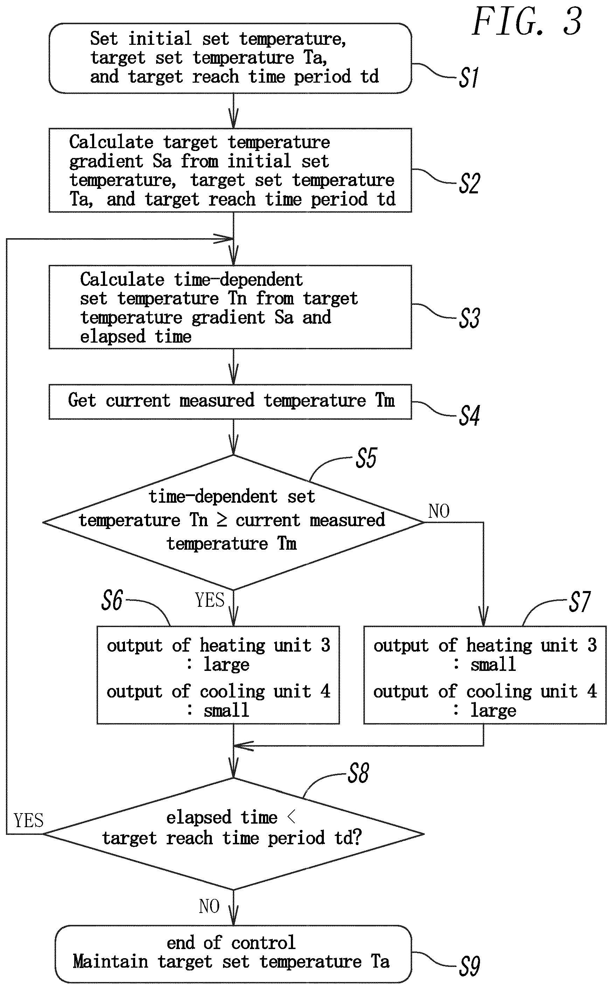

With reference to a flowchart of Fig. 3, the target set temperature Ta as a desired target temperature of the load W, a target reach time period td as a desired time period for the temperature of the load W to reach the target set temperature Ta, and an initial set temperature T0 as a set temperature at the start ts of temperature adjustment are inputted to the setting input unit 51 of the controller 5 (S1). The initial set temperature T0 set in advance may be used, and inputting the initial set temperature T0 may be omitted. The arithmetic unit 52 of the controller 5 calculates, based on the initial set temperature T0, the target set temperature Ta, and the target reach time period td, a target gradient (target temperature gradient Sa) of a change in temperature for the target reach time period td from the start of temperature adjustment (S2).

After the start of temperature adjustment of the load W to the target set temperature Ta, the arithmetic unit 52 calculates, based on the initial set temperature T0, the target temperature gradient Sa, and elapsed time (Δt×n:n = 1, 2, 3 ...) from the start ts of temperature adjustment, a target set temperature (time-dependent set temperature Tn:n = 1, 2, 3 ...), serving as a target at the current elapsed time, at predetermined time intervals Δt (S3). The time interval Δt may be inputted from the setting input unit 51 in S1 described above. The time interval Δt is not necessarily be constant, and can be previously set to vary depending on elapsed time. In other words, the arithmetic unit 52 calculates the time-dependent set temperature Tn of the load W from the target temperature gradient Sa at each (elapsed time) of a plurality of predetermined timings within the target reach time period td.

The load temperature sensor 64 inputs a measured temperature (time-dependent measured temperature) Tm of the load W at the current elapsed time (Δt×n) to the measurement input unit 50 of the controller 5 (S4). The arithmetic unit 52 compares the time-dependent set temperature Tn with the time-dependent measured temperature Tm (S5) and transmits the result of comparison to the control output unit 53 of the controller 5.

If the time-dependent set temperature Tn is higher than or equal to the time-dependent measured temperature Tm, the control output unit 53 performs control so that the output of the heating unit 3 defined by the output of the heater 31 is greater than the output of the cooling unit 4 defined by the flow rate of the heat-dissipating water through the flow control valve 45 (S6). If the time-dependent set temperature Tn is lower than the time-dependent measured temperature Tm, the control output unit 53 performs control so that the output of the cooling unit 4 is greater than the output of the heating unit 3 (S7). The difference between the outputs of the heating unit 3 and the cooling unit 4 in S6 and S7 described above can be determined based on, for example, a temperature difference between the time-dependent set temperature Tn and the time-dependent measured temperature Tm.

Steps S3 to S7 described above are repeated until the elapsed time (Δt×n) from the start ts of temperature adjustment reaches the target reach time period td (S8). If the elapsed time (Δt×n) has reached the target reach time period td, temperature control based on the target temperature gradient Sa is terminated. At the termination, the control is shifted to control for maintaining the temperature of the load W at the target set temperature Ta (S9). The above-described control method allows the temperature of the load to change to the target set temperature Ta along the target temperature gradient Sa. In step S9 described above, the temperature of the load W does not necessarily have to be maintained at the target set temperature Ta. The load W may be continuously subjected to temperature control for a previously set second target set temperature by using or without using the control based on the flowchart.

Conversely, assuming that the load W is adjusted to a temperature lower than the current target temperature, if the time-dependent set temperature Tn is lower than or equal to the time-dependent measured temperature Tm, control is performed so that the output of the cooling unit 4 is greater than the output of the heating unit 3 (S7). If the time-dependent set temperature Tn is higher than the time-dependent measured temperature Tm, control is performed so that the output of the heating unit 3 is greater than the output of the cooling unit 4 (S6).

### <Using First Temperature Sensor 20c or Third Temperature Sensor 21d in Circulating Liquid Circuit 2>

Since the temperature of the load W substantially follows the adjusted temperature of the circulating liquid as described above, the load W can also be adjusted to a target temperature based on the flowchart of Fig. 3 in this case. The following description will focus on differences from the above-described case using the load temperature sensor 64, and common description will be omitted.

In this case, in step S1, a temperature of the circulating liquid that corresponds to a desired target temperature of the load W is inputted as a target set temperature Ta to the setting input unit 51. At the same time, the initial set temperature T0 and the target reach time period td are inputted to the setting input unit 51. The initial set temperature T0 set in advance may be continuously used as described above. In step S2, the target temperature gradient Sa is calculated based on the initial set temperature T0, the target set temperature Ta, and the target reach time period td.

In step S3, after the start of temperature adjustment of the circulating liquid to the target set temperature Ta, the time-dependent set temperature Tn is calculated based on the initial set temperature T0, the target temperature gradient Sa, and the elapsed time (Δt×n) from the start ts of temperature adjustment at the predetermined time intervals Δt. In step S4, the time-dependent measured temperature Tm of the circulating liquid at the current elapsed time (Δt×n) is inputted from the first temperature sensor 20c or the third temperature sensor 21d in the circulating liquid circuit 2 to the measurement input unit 50. Then, in step S5, the time-dependent set temperature Tn is compared with the time-dependent measured temperature Tm.

If the time-dependent set temperature Tn is higher than or equal to the time-dependent measured temperature Tm, both the output of the heating unit 3 and the output of the cooling unit 4 are controlled in step S6 so that the output of the heating unit 3 is greater than the output of the cooling unit 4. If the time-dependent set temperature Tn is lower than the time-dependent measured temperature Tm, the outputs of the heating unit 3 and the cooling unit 4 are controlled in step S7 so that the output of the cooling unit 4 is greater than the output of the heating unit 3. The difference between the outputs of the heating unit 3 and the cooling unit 4 can be determined based, for example, not only on the temperature difference between the time-dependent set temperature Tn and the time-dependent measured temperature Tm, but also on the difference between a temperature measured by the first temperature sensor 20c and a temperature measured by the third temperature sensor 21d.

Steps S3 to S7 described above are repeated until the elapsed time (Δt×n) from the start ts of temperature adjustment reaches the target reach time period td in step S8. Then, the above-described temperature control is terminated in step S9. At the termination, the control is shifted to control for maintaining the temperature of the circulating liquid at the target set temperature Ta.

As described above, the temperature adjustment device 1 can gradually change the temperature of the load W to a target temperature, which the user desires, while performing temperature control during a process of adjusting the temperature of the load W to the target temperature.

### Reference Signs List

- 1: temperature adjustment device
- 2: circulating liquid circuit
- 20: return passage
20b first heat exchange passage
20c first temperature sensor
20d second temperature sensor
- 21: discharge passage
21d third temperature sensor
- 22: tank unit
- 23: main tank
- 25: circulation pump
- 3: heating unit
- 31: heater
- 4: cooling unit
- 40: heat-dissipating water circuit
- 41: heat exchanger
- 42: second heat exchange passage
- 43: heat-dissipating water introduction path
- 44: heat-dissipating water discharge path
- 45: flow control valve
- 5: controller
- 50: measurement input unit
- 51: setting input unit
- 52: arithmetic unit
- 53: control output unit
- 64: load temperature sensor
- W: load
- Ta: target set temperature
- td: target reach time period
- ts: start of temperature adjustment
- T0: initial set temperature
- Δt: measurement time interval
- Sa: target temperature gradient
- Tn: time-dependent set temperature
- Tm: time-dependent measured temperature

## Claims

1. A temperature adjustment device (1) to adjust a temperature of a load (W) to a target temperature, the temperature adjustment device (1) comprising:
a circulating liquid circuit (2) configured to cyclically deliver, to the load (W), circulating liquid returned from the load (W) after heat exchange with the load (W);
a heating unit (3) located in the circulating liquid circuit (2) and configured to heat the circulating liquid in the circulating liquid circuit (2);
a cooling unit (4) located in the circulating liquid circuit (2) and configured to cool the circulating liquid in the circulating liquid circuit (2); and
a controller (5) configured to control an output of the heating unit (3) and an output of the cooling unit (4),
the controller (5) including
a measurement input unit (50) for inputting a measured temperature of the load (W),
**characterised in** the controller (5) further including:
a setting input unit (51) for inputting the target temperature, serving as a target set temperature (Ta), and a target reach time period (td) for the temperature of the load to reach the target set temperature (Ta) from start of temperature adjustment,
an arithmetic unit (52) configured to determine, based on an initial set temperature (T0) at the start of temperature adjustment as well as the target set temperature (Ta) and the target reach time period (td) inputted from the setting input unit (51), a target temperature gradient (Sa) to the target set temperature (Ta), and
a control output unit (53) configured to control the output of the heating unit (3) and the output of the cooling unit (4) such that the measured temperature of the load (W) changes along the target temperature gradient (Sa) determined by the arithmetic unit (52).

2. A temperature adjustment device (1) to adjust a temperature of a load (W) to a target temperature, the temperature adjustment device comprising:
a circulating liquid circuit (2) configured to cyclically deliver, to the load (W), circulating liquid returned from the load (W) after heat exchange with the load (W);
a heating unit (3) located in the circulating liquid circuit (2) and configured to heat the circulating liquid in the circulating liquid circuit (2);
a cooling unit (4) located in the circulating liquid circuit (2) and configured to cool the circulating liquid in the circulating liquid circuit (2); and
a controller (5) configured to control an output of the heating unit (3) and an output of the cooling unit (4),
the controller (5) including
a measurement input unit (50) for inputting a measured temperature of the circulating liquid heated and cooled or to be heated and cooled,
a setting input unit (51) for inputting a target set temperature (Ta) of the circulating liquid that corresponds to the target temperature and a target reach time period (td) for the temperature of the circulating liquid to reach the target set temperature (Ta) from start of temperature adjustment,
**characterised in** the controller (5) further including:
an arithmetic unit (52) configured to calculate, based on an initial set temperature (T0) at the start of temperature adjustment as well as the target set temperature (Ta) and the target reach time period (td) inputted from the setting input unit (51), a target temperature gradient (Sa) to the target set temperature (Ta), and
a control output unit (53) configured to control the output of the heating unit (3) and the output of the cooling unit (4) such that the measured temperature of the circulating liquid changes along the target temperature gradient (Sa) determined by the arithmetic unit (52).

3. The temperature adjustment device (1) according to Claim 1 or 2, wherein the circulating liquid circuit (2) includes a return passage (20) through which the circulating liquid returned from the load (W) is received, a discharge passage (21) through which the circulating liquid subjected to temperature adjustment by the heating unit (3) and the cooling unit (4) is delivered to the load (W), a tank unit (22) connected to the return passage (20) and the discharge passage (21) and configured to store the circulating liquid, and a circulation pump (25) configured to deliver the circulating liquid in the tank unit (22) to the discharge passage (21).

4. The temperature adjustment device (1) according to Claim 1 or 2, wherein
the cooling unit (4) includes a heat-dissipating water circuit (40) for flowing heat-dissipating water and a heat exchanger (41) configured to exchange heat between the heat-dissipating water flowing through the heat-dissipating water circuit (40) and the circulating liquid flowing through the circulating liquid circuit (2),
the heating unit (3) includes a heater (31),
the heat-dissipating water circuit (40) includes a flow control valve (45) configured to adjust a flow rate of the heat-dissipating water flowing through the heat-dissipating water circuit (40), and
the control output unit (53) is configured to control the output of the heating unit (3) and the output of the cooling unit (4) by controlling the heater (31) and the flow control valve (45).

5. The temperature adjustment device (1) according to Claim 1, wherein
the arithmetic unit (52) is configured to calculate a time-dependent set temperature (Tn) of the load (W) from the target temperature gradient (Sa) at each of a plurality of timings within the target reach time period (td) and configured to compare the time-dependent set temperature (Tn) with the measured temperature of the load (W) inputted from the measurement input unit (50), and
the control output unit (53) is configured to control, based on a result of comparison between the time-dependent set temperature (Tn) and the measured temperature, the output of the heating unit (3) and the output of the cooling unit (4).

6. The temperature adjustment device (1) according to Claim 2, wherein
the arithmetic unit (52) is configured to calculate a time-dependent set temperature (Tn) of the circulating liquid from the target temperature gradient (Sa) at each of a plurality of timings within the target reach time period (td) and configured to compare the time-dependent set temperature (Tn) with the measured temperature of the circulating liquid inputted from the measurement input unit (50), and
the control output unit (53) is configured to control, based on a result of comparison between the time-dependent set temperature (Tn) and the measured temperature, the output of the heating unit (3) and the output of the cooling unit (4).

7. The temperature adjustment device (1) according to Claim 3, wherein
a circulating liquid return port (20a) formed in the housing (10) in the temperature adjustment device (1) is disposed at one end of the return passage (20),
the tank unit (22) is connected to the other end of the return passage (20),
the cooling unit (4) is disposed on the return passage (20),
the heating unit (3) is disposed on the tank unit (22),
a temperature sensor (20c) for measuring the temperature of the circulating liquid returned from the load (W) is disposed between the circulating liquid return port (20a) in the return passage (20) and the cooling unit (4),
a temperature sensor (20d) for measuring the temperature of the circulating· liquid cooled by the cooling unit (4) is disposed between the cooling unit (4) in the return passage (20) and the tank unit (22),
and the control unit (5) is configured to detect an abnormal temperature of the circulating liquid based on the temperature of the circulating liquid measured by the temperature sensors (20c, 20d).

8. A method for adjusting a temperature of a load (W) in liquid form to a target temperature using a temperature adjustment device (1) comprising:
a circulating liquid circuit (2) configured to cyclically deliver, to the load (W), circulating liquid returned from the load (W) after heat exchange with the load (W);
a heating unit (3) located in the circulating liquid circuit (2) and configured to heat the circulating liquid in the circulating liquid circuit (2); and
a cooling unit (4) located in the circulating liquid circuit (2) and configured to cool the circulating liquid in the circulating liquid circuit (2),
said method comprising:
measuring the temperature of the load (W) by a load temperature sensor 64;
**characterized in** the method further comprising:
inputting the target temperature serving as a target set temperature (Ta), and a target reach time period (td) for the temperature of the load to reach the target set temperature (Ta) from start of temperature adjustment;
obtaining a target temperature gradient (Sa) to reach the target set temperature (Ta) based on an initial set temperature (T0) at the start of temperature adjustment as well as the target set temperature (Ta) and the target reach time period (td) inputted;
controlling the output of the heating unit (3) and the output of the cooling unit (4) such that the measured temperature of the load (W) changes along the target temperature gradient (Sa); and
adjusting the temperature of the load (W) to the target temperature by heat exchange between the load (W) stored in the tank (60) and the circulating liquid that flows through the heat exchange pipe (62) immersed in the liquid load (W) in the tank (60).

9. A method for adjusting a temperature of a load (W) in liquid form to a target temperature using a temperature adjustment device (1) comprising:
circulating liquid circuit (2) configured to cyclically deliver, to the load (W), a circulating liquid returned from the load (W) after heat exchange with the load (W);
a heating unit (3) located in the circulating liquid circuit (2) and configured to heat the circulating liquid in the circulating liquid circuit (2); and
a cooling unit (4) located in the circulating liquid circuit (2) and configured to cool the circulating liquid in the circulating liquid circuit (2),
said method comprising:
measuring either the temperature of the circulating liquid after the heating and cooling, or the temperature of the circulating liquid before the heating and cooling by using temperature sensors (20c, 20d, 21d);
inputting a target set temperature (Ta) of the circulating liquid corresponding to the target temperature and a target reach time period (td) for the temperature of the load to reach the target set temperature (Ta) from start of temperature adjustment;
**characterized in** the method further comprising:
calculating a target temperature gradient (Sa) to reach the target set temperature (Ta) based on an initial set temperature (T0) at the start of temperature adjustment as well as the target set temperature (Ta) and the target reach time period (td) inputted;
controlling the output of the heating unit (3) and the output of the cooling unit (4) such that the measured temperature of the circulating liquid changes along the target temperature gradient (Sa); and
adjusting the temperature of the load (W) to the target temperature by heat exchange between the load (W) stored in the tank (60) and the circulating liquid that flows through the heat exchange pipe (62) immersed in the liquid load (W) in the tank (60).

10. The method for adjusting a temperature of a load according to claim 8, comprising:
calculating the time-dependent set temperature (Tn) of the load (W) from the target temperature gradient (Sa) at each of a plurality of predetermined timings within the target reach time period (td);
comparing the time-dependent set temperature (Tn) with the measured temperature of the load (W); and
controlling, based on this comparison result, the outputs and the heating unit (3) and the cooling unit (4).

11. The method for adjusting a temperature of a load according to claim 9, comprising:
calculating the time-dependent set temperature (Tn) of the load (W) from the target temperature gradient (Sa) at each of a plurality of predetermined timings within the target reach time period (td);
comparing the time-dependent set temperature (Tn) with the measured temperature of the circulating liquid, and
controlling, based on this comparison result, the outputs and the heating unit (3) and the cooling unit (4).

12. The method for adjusting a temperature of a load according to claim 8 or 9, using a temperature adjustment device (1) comprising:
a circulating liquid circuit (2) comprising a return passage (20) configured to receive a circulating liquid returned from the load (W), a discharge passage (21) configured to deliver the circulating liquid thermally adjusted by the heating unit (3) and the cooling unit (4) to the load (W), and a tank unit (22) to which the return passage (20) and the discharge passage (21) are connected to store the circulating liquid, the return passage (20) comprising the cooling unit (4), and the tank unit (22) comprising the heating unit (3),
wherein the method comprises detecting an abnormal temperature of the circulating liquid based on the temperature of the circulating liquid measured at the lower stream side of the cooling unit (4) in the return passage (20).

## Patentansprüche

1. Temperatureinstellvorrichtung (1) zum Einstellen einer Temperatur einer Last (W) auf eine Solltemperatur, wobei die Temperatureinstellvorrichtung (1) umfasst:
einen Flüssigkeitskreislauf (2), der so konfiguriert ist, dass er der Last (W) zyklisch eine von der Last (W) zurückgeführte Flüssigkeit zuführt, nachdem diese mit der Last (W) einen Wärmeaustausch durchgeführt hat;
eine Heizeinheit (3), die sich im Flüssigkeitskreislauf (2) befindet und so konfiguriert ist, dass sie die im Flüssigkeitskreislauf (2) zirkulierende Flüssigkeit erwärmt;
eine Kühleinheit (4), die sich im Flüssigkeitskreislauf (2) befindet und so konfiguriert ist, dass sie die im Flüssigkeitskreislauf (2) zirkulierende Flüssigkeit kühlt; und
eine Steuereinheit (5), die so konfiguriert ist, dass sie die Leistung der Heizeinheit (3) und die Leistung der Kühleinheit (4) steuert,
wobei die Steuereinheit (5) Folgendes umfasst
eine Messeingabeeinheit (50) zum Eingeben einer gemessenen Temperatur der Last (W),
**dadurch gekennzeichnet, dass** die Steuereinheit (5) außerdem umfasst:
eine Einstelleingabeeinheit (51) zum Eingeben der Zieltemperatur, die als Soll-Setztemperatur (Ta) dient, und einer Soll-Erreichungszeit (td) für die Temperatur der Last, um die Soll-Setztemperatur (Ta) vom Beginn der Temperaturanpassung zu erreichen,
eine Recheneinheit (52), die so konfiguriert ist, dass sie auf der Grundlage einer anfänglichen Solltemperatur (T0) zu Beginn der Temperaturanpassung sowie der Solltemperatur (Ta) und der Soll-Erreichungszeit (td), die von der Einstelleinheit (51) eingegeben wurden, einen Solltemperaturgradienten (Sa) zur Solltemperatur (Ta) bestimmt, und
eine Steuerausgabeeinheit (53), die so konfiguriert ist, dass sie die Leistung der Heizeinheit (3) und die Leistung der Kühleinheit (4) so steuert, dass sich die gemessene Temperatur der Last (W) entlang des von der Recheneinheit (52) bestimmten Solltemperaturgradienten (Sa) ändert.

2. Temperatureinstellvorrichtung (1) zum Einstellen einer Temperatur einer Last (W) auf eine Solltemperatur, wobei die Temperatureinstellvorrichtung umfasst:
einen Flüssigkeitskreislauf (2), der so konfiguriert ist, dass er der Last (W) zyklisch die von der Last (W) nach dem Wärmeaustausch mit der Last (W) zurückgeführte Flüssigkeit zuführt;
eine Heizeinheit (3), die sich im Flüssigkeitskreislauf (2) befindet und so konfiguriert ist, dass sie die im Flüssigkeitskreislauf (2) zirkulierende Flüssigkeit erwärmt;
eine Kühleinheit (4), die sich im Flüssigkeitskreislauf (2) befindet und so konfiguriert ist, dass sie die im Flüssigkeitskreislauf (2) zirkulierende Flüssigkeit kühlt; und
eine Steuereinheit (5), die so konfiguriert ist, dass sie die Leistung der Heizeinheit (3) und die Leistung der Kühleinheit (4) steuert, wobei die Steuereinheit (5) Folgendes umfasst
eine Messeingabeeinheit (50) zum Eingeben einer gemessenen Temperatur der erwärmten und gekühlten oder zu erwärmenden und zu kühlenden zirkulierenden Flüssigkeit,
**dadurch gekennzeichnet, dass** die Steuereinheit (5) außerdem umfasst:
eine Einstelleingabeeinheit (51) zum Eingeben einer Soll-Einstellungstemperatur (Ta) der zirkulierenden Flüssigkeit, die der Solltemperatur entspricht, und einer Soll-Erreichungszeitdauer (td) für das Erreichen der Soll-Einstellungstemperatur (Ta) durch die Temperatur der zirkulierenden Flüssigkeit ab Beginn der Temperaturanpassung,
eine Recheneinheit (52), die so konfiguriert ist, dass sie auf der Grundlage einer anfänglichen Solltemperatur (T0) zu Beginn der Temperaturanpassung sowie der Soll-Solltemperatur (Ta) und der Soll-Erreichungszeit (td), die von der Einstelleinheit (51) eingegeben wurden, einen Soll-Temperaturgradienten (Sa) zur Soll-Solltemperatur (Ta) berechnet, und
eine Steuerausgabeeinheit (53), die so konfiguriert ist, dass sie die Leistung der Heizeinheit (3) und die Leistung der Kühleinheit (4) so steuert, dass sich die gemessene Temperatur der zirkulierenden Flüssigkeit entlang des von der Recheneinheit (52) bestimmten Solltemperaturgradienten (Sa) ändert.

3. Temperatureinstellvorrichtung (1) nach Anspruch 1 oder 2, wobei der Umlaufflüssigkeitskreislauf (2) einen Rücklaufkanal (20), durch den die von der Last (W) zurückgeführte Umlaufflüssigkeit aufgenommen wird, einen Auslasskanal (21), durch den die von der Heizeinheit (3) und der Kühleinheit (4) temperaturgeregelte Umlaufflüssigkeit zur Last (W) geleitet wird, eine Tankeinheit (22), die mit dem Rücklaufkanal (20) und dem Auslasskanal (21) verbunden ist und zum Speichern der zirkulierenden Flüssigkeit konfiguriert ist, und eine Umwälzpumpe (25), die zum Zuführen der zirkulierenden Flüssigkeit in der Tankeinheit (22) zum Auslasskanal (21) konfiguriert ist, umfasst.

4. Temperatureinstellvorrichtung (1) gemäß Anspruch 1 oder 2, wobei
die Kühleinheit (4) einen Wärmeableitungswasserkreislauf (40) zum Fließenlassen von Wärmeableitungswasser und einen Wärmetauscher (41) umfasst, der so konfiguriert ist, dass er Wärme zwischen dem durch den Wärmeableitungswasserkreislauf (40) fließenden Wärmeableitungswasser und der durch den Zirkulationsflüssigkeitskreislauf (2) fließenden Zirkulationsflüssigkeit austauscht,
die Heizeinheit (3) eine Heizvorrichtung (31) umfasst,
der Wärmeableitungswasserkreislauf (40) ein Durchflussregelventil (45) umfasst, das so konfiguriert ist, dass es die Durchflussrate des durch den Wärmeableitungswasserkreislauf (40) fließenden Wärmeableitungswassers reguliert, und
die Steuerausgabeeinheit (53) so konfiguriert ist, dass sie die Leistung der Heizeinheit (3) und die Leistung der Kühleinheit (4) durch Steuern des Heizelements (31) und des Durchflussregelventils (45) steuert.

5. Temperatureinstellvorrichtung (1) nach Anspruch 1, wobei
die Recheneinheit (52) so konfiguriert ist, dass sie eine zeitabhängige Solltemperatur (Tn) der Last (W) aus dem Solltemperaturgradienten (Sa) zu jedem einer Vielzahl von Zeitpunkten innerhalb des Soll-Erreichungszeitraums (td) berechnet, und so konfiguriert ist, dass sie die zeitabhängige Solltemperatur (Tn) mit der von der Messeingabeeinheit (50) eingegebenen gemessenen Temperatur der Last (W) vergleicht, und
die Steuerausgabeeinheit (53) so konfiguriert ist, dass sie auf der Grundlage eines Vergleichsergebnisses zwischen der zeitabhängigen Solltemperatur (Tn) und der gemessenen Temperatur die Leistung der Heizeinheit (3) und die Leistung der Kühleinheit (4) steuert.

6. Temperatureinstellvorrichtung (1) gemäß Anspruch 2, wobei
die Recheneinheit (52) so konfiguriert ist, dass sie eine zeitabhängige Solltemperatur (Tn) der zirkulierenden Flüssigkeit aus dem Solltemperaturgradienten (Sa) zu jedem einer Vielzahl von Zeitpunkten innerhalb des Soll-Erreichungszeitraums (td) berechnet, und so konfiguriert ist, dass sie die zeitabhängige Solltemperatur (Tn) mit der von der Messeingabeeinheit (50) eingegebenen gemessenen Temperatur der zirkulierenden Flüssigkeit vergleicht, und
die Steuerausgabeeinheit (53) so konfiguriert ist, dass sie auf der Grundlage eines Vergleichsergebnisses zwischen der zeitabhängigen Solltemperatur (Tn) und der gemessenen Temperatur die Leistung der Heizeinheit (3) und die Leistung der Kühleinheit (4) steuert.

7. Temperatureinstellvorrichtung (1) gemäß Anspruch 3, wobei
ein in dem Gehäuse (10) in der Temperatureinstellvorrichtung (1) ausgebildeter Rücklaufanschluss (20a) für die zirkulierende Flüssigkeit an einem Ende des Rücklaufkanals (20) angeordnet ist,
die Tankeinheit (22) mit dem anderen Ende des Rücklaufkanals (20) verbunden ist,
die Kühleinheit (4) an dem Rücklaufkanal (20) angeordnet ist,
die Heizeinheit (3) an der Tankeinheit (22) angeordnet ist,
ein Temperatursensor (20c) zum Messen der Temperatur der von der Last (W) zurückgeführten zirkulierenden Flüssigkeit zwischen der Rücklauföffnung (20a) für die zirkulierende Flüssigkeit im Rücklaufkanal (20) und der Kühleinheit (4) angeordnet ist,
ein Temperatursensor (20d) zum Messen der Temperatur der von der Kühleinheit (4) gekühlten zirkulierenden Flüssigkeit zwischen der Kühleinheit (4) im Rücklaufkanal (20) und der Tankeinheit (22) angeordnet ist,
und die Steuereinheit (5) ist so konfiguriert, dass sie eine abnormale Temperatur der zirkulierenden Flüssigkeit auf der Grundlage der von den Temperatursensoren (20c, 20d) gemessenen Temperatur der zirkulierenden Flüssigkeit erkennt.

8. Verfahren zum Einstellen einer Temperatur einer Last (W) in flüssiger Form auf eine Solltemperatur unter Verwendung einer Temperatureinstellvorrichtung (1), umfassend:
einen Flüssigkeitskreislauf (2), der so konfiguriert ist, dass er der Last (W) zyklisch die von der Last (W) zurückgeführte Flüssigkeit nach dem Wärmeaustausch mit der Last (W) zuführt;
eine in dem zirkulierenden Flüssigkeitskreislauf (2) angeordnete Heizeinheit (3), die so konfiguriert ist, dass sie die zirkulierende Flüssigkeit in dem zirkulierenden Flüssigkeitskreislauf (2) erwärmt; und
eine in dem zirkulierenden Flüssigkeitskreislauf (2) angeordnete Kühleinheit (4), die so konfiguriert ist, dass sie die zirkulierende Flüssigkeit in dem zirkulierenden Flüssigkeitskreislauf (2) kühlt,
wobei das Verfahren umfasst:
Messen der Temperatur der Last (W) durch einen Lasttemperatursensor 64;
**dadurch gekennzeichnet, dass** das Verfahren außerdem umfasst:
Eingeben der Solltemperatur, die als Soll-Einstellungstemperatur (Ta) dient, und einer Soll-Erreichungszeit (td) für die Temperatur der Last, um die Soll-Einstellungstemperatur (Ta) ab Beginn der Temperaturanpassung zu erreichen;
Ermitteln eines Solltemperaturgradienten (Sa) zum Erreichen der Soll-Einstellungstemperatur (Ta) auf der Grundlage einer anfänglichen Einstellungstemperatur (T0) zu Beginn der Temperaturanpassung sowie der eingegebenen Soll-Einstellungstemperatur (Ta) und der Soll-Erreichungszeit (td);
Steuern der Leistung der Heizeinheit (3) und der Leistung der Kühleinheit (4) derart, dass sich die gemessene Temperatur der Last (W) entlang des Soll-temperaturgradienten (Sa) ändert; und
Einstellen der Temperatur der Last (W) auf die Zieltemperatur durch Wärmeaustausch zwischen der in dem Tank (60) gespeicherten Last (W) und der zirkulierenden Flüssigkeit, die durch das in die Flüssigkeitslast (W) in dem Tank (60) eingetauchte Wärmeaustauschrohr (62) fließt.

9. Verfahren zum Einstellen einer Temperatur einer Last (W) in flüssiger Form auf eine Solltemperatur
unter Verwendung einer Temperatureinstellvorrichtung (1), umfassend:
einen Flüssigkeitskreislauf (2), der so konfiguriert ist, dass er der Last (W) zyklisch eine zirkulierende Flüssigkeit zuführt, die nach dem Wärmeaustausch mit der Last (W) von der Last (W) zurückgeführt wird;
eine Heizeinheit (3), die sich im Flüssigkeitskreislauf (2) befindet und so konfiguriert ist, dass sie die im Flüssigkeitskreislauf (2) zirkulierende Flüssigkeit erwärmt; und
eine Kühleinheit (4), die sich im Flüssigkeitskreislauf (2) befindet und so konfiguriert ist, dass sie die zirkulierende Flüssigkeit im Flüssigkeitskreislauf (2) kühlt,
wobei das Verfahren umfasst:
Messen entweder der Temperatur der zirkulierenden Flüssigkeit nach dem Erhitzen und Kühlen oder der Temperatur der zirkulierenden Flüssigkeit vor dem Erhitzen und Kühlen unter Verwendung von Temperatursensoren (20c, 20d, 21d);
Eingeben einer Soll-Einstelltemperatur (Ta) der zirkulierenden Flüssigkeit, die der Solltemperatur entspricht, und einer Soll-Erreichungszeit (td) für die Temperatur der Last, um die Soll-Einstelltemperatur (Ta) ab Beginn der Temperaturanpassung zu erreichen;
**dadurch gekennzeichnet, dass** das Verfahren außerdem umfasst:
Berechnen eines Soll-Temperaturgradienten (Sa) zum Erreichen der Soll-Einstellungstemperatur (Ta) auf der Grundlage einer anfänglichen Einstellungstemperatur (T0) zu Beginn der Temperaturanpassung sowie der eingegebenen Soll-Einstellungstemperatur (Ta) und Soll-Erreichungszeit (td);
Steuern der Leistung der Heizeinheit (3) und der Leistung der Kühleinheit (4) derart, dass sich die gemessene Temperatur der zirkulierenden Flüssigkeit entlang des Solltemperaturgradienten (Sa) ändert; und
Anpassen der Temperatur der Last (W) an die Solltemperatur durch Wärmeaustausch zwischen der in dem Tank (60) gespeicherten Last (W) und der zirkulierenden Flüssigkeit, die durch das in die Flüssigkeitslast (W) in dem Tank (60) eingetauchte Wärmeaustauschrohr (62) fließt.

10. Verfahren zum Einstellen einer Temperatur einer Last gemäß Anspruch 8, umfassend:
Berechnen der zeitabhängigen Solltemperatur (Tn) der Last (W) aus dem Soll-temperaturgradienten (Sa) zu jedem einer Vielzahl von vorbestimmten Zeitpunkten innerhalb des Soll-Erreichungszeitraums (td);
Vergleichen der zeitabhängigen Solltemperatur (Tn) mit der gemessenen Temperatur der Ladung (W); und
Steuern der Ausgänge und der Heizeinheit (3) und der Kühleinheit (4) auf der Grundlage dieses Vergleichsergebnisses.

11. Verfahren zum Einstellen einer Temperatur einer Last gemäß Anspruch 9, umfassend:
Berechnen der zeitabhängigen Solltemperatur (Tn) der Last (W) aus dem Solltemperaturgradienten (Sa) zu jedem einer Vielzahl von vorbestimmten Zeitpunkten innerhalb des Soll-Erreichungszeitraums (td);
Vergleichen der zeitabhängigen Solltemperatur (Tn) mit der gemessenen Temperatur der zirkulierenden Flüssigkeit und
Steuern der Ausgänge und der Heizeinheit (3) und der Kühleinheit (4) auf der Grundlage dieses Vergleichsergebnisses.

12. Verfahren zum Einstellen einer Temperatur einer Last gemäß Anspruch 8 oder 9 unter Verwendung einer Temperatureinstellvorrichtung (1), die umfasst:
einen zirkulierenden Flüssigkeitskreislauf (2) mit einem Rücklaufkanal (20), der so konfiguriert ist, dass er eine von der Last (W) zurückgeführte zirkulierende Flüssigkeit aufnimmt, einem Auslasskanal (21), der so konfiguriert ist, dass er die durch die Heizeinheit (3) und die Kühleinheit (4) thermisch geregelte zirkulierende Flüssigkeit an die Last (W) abgibt, und eine Tankeinheit (22), mit der der Rücklaufkanal (20) und der Auslasskanal (21) verbunden sind, um die zirkulierende Flüssigkeit zu speichern, wobei der Rücklaufkanal (20) die Kühleinheit (4) umfasst und die Tankeinheit (22) die Heizeinheit (3) umfasst,
wobei das Verfahren das Erfassen einer abnormalen Temperatur der zirkulierenden Flüssigkeit auf der Grundlage der Temperatur der zirkulierenden Flüssigkeit umfasst, die an der unteren Strömungsseite der Kühleinheit (4) im Rücklaufkanal (20) gemessen wird.

## Revendications

1. Dispositif de réglage de température (1) destiné à régler une température d'une charge (W) à une température cible, le dispositif de réglage de température (1) comprenant :
un circuit de liquide circulant (2) configuré pour délivrer cycliquement, à la charge (W), du liquide circulant renvoyé à partir de la charge (W) après un échange de chaleur avec la charge (W) ;
une unité de chauffage (3) située dans le circuit de liquide circulant (2) et configurée pour chauffer le liquide circulant dans le circuit de liquide circulant (2) ;
une unité de refroidissement (4) située dans le circuit de liquide circulant (2) et configurée pour refroidir le liquide circulant dans le circuit de liquide circulant (2) ; et
un dispositif de commande (5) configuré pour commander une sortie de l'unité de chauffage (3) et une sortie de l'unité de refroidissement (4),
le dispositif de commande (5) incluant
une unité d'entrée de mesure (50) pour l'entrée d'une température mesurée de la charge (W),
**caractérisé en ce que** le dispositif de commande (5) inclut en outre :
une unité d'entrée de consigne (51) pour l'entrée de la température cible, laquelle sert de température de consigne cible (Ta), et d'un laps de temps d'atteinte cible (td) nécessaire pour que la température de la charge atteigne la température de consigne cible (Ta) à partir du début du réglage de température,
une unité de calcul (52) configurée pour déterminer, sur la base d'une température de consigne initiale (T0) au début du réglage de température et sur la base de la température de consigne cible (Ta) et du laps de temps d'atteinte cible (td) entrés depuis l'unité d'entrée de consigne (51), un gradient de température cible (Sa) par rapport à température de consigne cible (Ta), et
une unité de sortie de commande (53) configurée pour commander la sortie de l'unité de chauffage (3) et la sortie de l'unité de refroidissement (4) de manière à ce que la température mesurée de la charge (W) varie en fonction du gradient de température cible (Sa) déterminé par l'unité de calcul (52).

2. Dispositif de réglage de température (1) destiné à régler une température d'une charge (W) à une température cible, le dispositif de réglage de température comprenant :
un circuit de liquide circulant (2) configuré pour délivrer cycliquement, à la charge (W), du liquide circulant renvoyé à partir de la charge (W) après un échange de chaleur avec la charge (W) ;
une unité de chauffage (3) située dans le circuit de liquide circulant (2) et configurée pour chauffer le liquide circulant dans le circuit de liquide circulant (2) ;
une unité de refroidissement (4) située dans le circuit de liquide circulant (2) et configurée pour refroidir le liquide circulant dans le circuit de liquide circulant (2) ; et
un dispositif de commande (5) configuré pour commander une sortie de l'unité de chauffage (3) et une sortie de l'unité de refroidissement (4),
le dispositif de commande (5) incluant
une unité d'entrée de mesure (50) pour l'entrée d'une température mesurée du liquide circulant chauffé et refroidi ou devant être chauffé et refroidi,
une unité d'entrée de consigne (51) pour l'entrée d'une température de consigne cible (Ta) du liquide circulant, laquelle correspond à la température cible, et d'un laps de temps d'atteinte cible (td) nécessaire pour que la température du liquide circulant atteigne la température de consigne cible (Ta) à partir du début du réglage de température,
**caractérisé en ce que** le dispositif de commande (5) inclut en outre :
une unité de calcul (52) configurée pour calculer, sur la base d'une température de consigne initiale (T0) au début du réglage de température et sur la base de la température de consigne cible (Ta) et du laps de temps d'atteinte cible (td) entrés depuis l'unité d'entrée de consigne (51), un gradient de température cible (Sa) par rapport à la température de consigne cible (Ta), et
une unité de sortie de commande (53) configurée pour commander la sortie de l'unité de chauffage (3) et la sortie de l'unité de refroidissement (4) de manière à ce que la température mesurée du liquide circulant varie en fonction du gradient de température cible (Sa) déterminé par l'unité de calcul (52).

3. Dispositif de réglage de température (1) selon la revendication 1 ou 2, dans lequel le circuit de liquide circulant (2) inclut un passage de retour (20) à travers lequel le liquide circulant renvoyé depuis la charge (W) est reçu, un passage de décharge (21) à travers lequel le liquide circulant soumis au réglage de température par l'unité de chauffage (3) et l'unité de refroidissement (4) est délivré à la charge (W), une unité de réservoir (22) raccordée au passage de retour (20) et au passage de décharge (21) et configurée pour stocker le liquide circulant, et une pompe de circulation (25) configurée pour délivrer le liquide circulant dans l'unité de réservoir (22) vers le passage de décharge (21).

4. Dispositif de réglage de température (1) selon la revendication 1 ou 2, dans lequel
l'unité de refroidissement (4) inclut un circuit d'eau de dissipation de chaleur (40) pour l'écoulement d'eau de dissipation de chaleur et un échangeur de chaleur (41) configuré pour échanger de la chaleur entre l'eau de dissipation de chaleur s'écoulant à travers le circuit d'eau de dissipation de chaleur (40) et le liquide circulant s'écoulant à travers le circuit de liquide circulant (2),
l'unité de chauffage (3) inclut un élément chauffant (31),
le circuit d'eau de dissipation de chaleur (40) inclut une soupape de régulation de débit (45) configurée pour régler un débit de l'eau de dissipation de chaleur s'écoulant à travers le circuit d'eau de dissipation de chaleur (40), et
l'unité de sortie de commande (53) est configurée pour commander la sortie de l'unité de chauffage (3) et la sortie de l'unité de refroidissement (4) en commandant l'élément chauffant (31) et la soupape de régulation de débit (45).

5. Dispositif de réglage de température (1) selon la revendication 1, dans lequel
l'unité de calcul (52) est configurée pour calculer une température de consigne dépendante du temps (Tn) de la charge (W) à partir du gradient de température cible (Sa) à chacun parmi une pluralité de moments dans le laps de temps d'atteinte cible (td) et configurée pour comparer la température de consigne dépendante du temps (Tn) avec la température mesurée de la charge (W) entrée depuis l'unité d'entrée de mesure (50), et
l'unité de sortie de commande (53) est configurée pour commander la sortie de l'unité de chauffage (3) et la sortie de l'unité de refroidissement (4) sur la base d'un résultat de comparaison entre la température de consigne dépendante du temps (Tn) et la température mesurée.

6. Dispositif de réglage de température (1) selon la revendication 2, dans lequel
l'unité de calcul (52) est configurée pour calculer une température de consigne dépendante du temps (Tn) du liquide circulant à partir du gradient de température cible (Sa) à chacun parmi une pluralité de moments dans le laps de temps d'atteinte cible (td) et configurée pour comparer la température de consigne dépendante du temps (Tn) avec la température mesurée du liquide circulant entrée depuis l'unité d'entrée de mesure (50), et
l'unité de sortie de commande (53) est configurée pour commander la sortie de l'unité de chauffage (3) et la sortie de l'unité de refroidissement (4) sur la base d'un résultat de comparaison entre la température de consigne dépendante du temps (Tn) et la température mesurée.

7. Dispositif de réglage de température (1) selon la revendication 3, dans lequel
un orifice de retour de liquide circulant (20a) formé dans le boîtier (10) dans le dispositif de réglage de température (1) est disposé à une extrémité du passage de retour (20),
l'unité de réservoir (22) est raccordée à l'autre extrémité du passage de retour (20),
l'unité de refroidissement (4) est disposée sur le passage de retour (20),
l'unité de chauffage (3) est disposée sur l'unité de réservoir (22),
un capteur de température (20c) destiné à mesurer la température du liquide circulant renvoyé à partir de la charge (W) est disposé entre l'orifice de retour de liquide circulant (20a) dans le passage de retour (20) et l'unité de refroidissement (4),
un capteur de température (20d) destiné à mesurer la température du liquide circulant refroidi par l'unité de refroidissement (4) est disposé entre l'unité de refroidissement (4) dans le passage de retour (20) et l'unité de réservoir (22),
et l'unité de commande (5) est configurée pour détecter une température anormale du liquide circulant sur la base de la température du liquide circulant mesurée par les capteurs de température (20c, 20d).

8. Procédé de réglage d'une température d'une charge (W) sous forme liquide à une température cible à l'aide du dispositif de réglage de température (1), comprenant :
un circuit de liquide circulant (2) configuré pour délivrer cycliquement, à la charge (W), du liquide circulant renvoyé à partir de la charge (W) après un échange de chaleur avec la charge (W) ;
une unité de chauffage (3) située dans le circuit de liquide circulant (2) et configurée pour chauffer le liquide circulant dans le circuit de liquide circulant (2) ; et
une unité de refroidissement (4) située dans le circuit de liquide circulant (2) et configurée pour refroidir le liquide circulant dans le circuit de liquide circulant (2),
ledit procédé comprenant :
la mesure de la température de la charge (W) par un capteur de température de charge (64) ;
**caractérisé en ce que** le procédé comprend en outre :
l'entrée de la température cible servant de température de consigne cible (Ta), et d'un laps de temps d'atteinte cible (td) nécessaire pour que la température de la charge atteigne la température de consigne cible (Ta) à partir du début du réglage de température ;
l'obtention d'un gradient de température cible (Sa) pour l'atteinte de la température de consigne cible (Ta) sur la base d'une température de consigne initiale (T0) au début du réglage de température, et sur la base de la température de consigne cible (Ta) et du laps de temps d'atteinte cible (td) entrés ;
la commande de la sortie de l'unité de chauffage (3) et de la sortie de l'unité de refroidissement (4) de manière à ce que la température mesurée de la charge (W) varie en fonction du gradient de température cible (Sa) ; et
le réglage de la température de la charge (W) à la température cible par un échange de chaleur entre la charge (W) stockée dans le réservoir (60) et le liquide circulant s'écoulant à travers le tuyau d'échange de chaleur (62) immergé dans la charge liquide (W) dans le réservoir (60).

9. Procédé de réglage d'une température d'une charge (W) sous forme liquide à une température cible à l'aide du dispositif de réglage de température (1), comprenant :
un circuit de liquide circulant (2) configuré pour délivrer cycliquement, à la charge (W), du liquide circulant renvoyé à partir de la charge (W) après un échange de chaleur avec la charge (W) ;
une unité de chauffage (3) située dans le circuit de liquide circulant (2) et configurée pour chauffer le liquide circulant dans le circuit de liquide circulant (2) ; et
une unité de refroidissement (4) située dans le circuit de liquide circulant (2) et configurée pour refroidir le liquide circulant dans le circuit de liquide circulant (2),
ledit procédé comprenant :
la mesure soit de la température du liquide circulant après le chauffage et le refroidissement, ou de la température du liquide circulant avant le chauffage et le refroidissement à l'aide de capteurs de température (20c, 20d, 21d) ;
l'entrée d'une température de consigne cible (Ta) du liquide circulant, laquelle correspond à la température cible, et d'un laps de temps d'atteinte cible (td) nécessaire pour que la température de la charge atteigne la température de consigne cible (Ta) à partir du début du réglage de température ;
**caractérisé en ce que** le procédé comprend en outre :
le calcul d'un gradient de température cible (Sa) pour l'atteinte de la température de consigne cible (Ta), sur la base d'une température de consigne initiale (T0) au début du réglage de température et sur la base de la température de consigne cible (Ta) et du laps de temps d'atteinte cible (td) entrés ;
la commande de la sortie de l'unité de chauffage (3) et de la sortie de l'unité de refroidissement (4) de manière à ce que la température mesurée du liquide circulant varie en fonction du gradient de température cible (Sa) ; et
le réglage de la température de la charge (W) à la température cible par un échange de chaleur entre la charge (W) stockée dans le réservoir (60) et le liquide circulant s'écoulant à travers le tuyau d'échange de chaleur (62) immergé dans la charge liquide (W) dans le réservoir (60).

10. Procédé de réglage d'une température d'une charge selon la revendication 8, comprenant :
le calcul de la température de consigne dépendante du temps (Tn) de la charge (W) à partir du gradient de température cible (Sa) à chacun parmi une pluralité de moments prédéterminés dans le laps de temps d'atteinte cible (td) ;
la comparaison de la température de consigne dépendante du temps (Tn) avec la température mesurée de la charge (W) ; et
la commande des sorties de l'unité de chauffage (3) et de l'unité de refroidissement (4) sur la base de ce résultat de comparaison.

11. Procédé de réglage d'une température d'une charge selon la revendication 9, comprenant :
le calcul de la température de consigne dépendante du temps (Tn) de la charge (W) à partir du gradient de température cible (Sa) à chacun parmi une pluralité de moments prédéterminés dans le laps de temps d'atteinte cible (td) ;
la comparaison de la température de consigne dépendante du temps (Tn) avec la température mesurée du liquide circulant, et
la commande des sorties de l'unité de chauffage (3) et de l'unité de refroidissement (4) sur la base de ce résultat de comparaison.

12. Procédé de réglage d'une température d'une charge selon la revendication 8 ou 9, à l'aide d'un dispositif de réglage de température (1) comprenant :
un circuit de liquide circulant (2) comprenant un passage de retour (20) configuré pour recevoir un liquide circulant renvoyé à partir de la charge (W), un passage de décharge (21) configuré pour délivrer le liquide circulant réglé thermiquement par l'unité de chauffage (3) et l'unité de refroidissement (4) vers la charge (W), et une unité de réservoir (22) à laquelle le passage de retour (20) et le passage de décharge (21) sont raccordés pour stocker le liquide circulant, le passage de retour (20) comprenant l'unité de refroidissement (4), et l'unité de réservoir (22) comprenant l'unité de chauffage (3),
dans lequel le procédé comprend la détection d'une température anormale du liquide circulant sur la base de la température du liquide circulant mesurée sur le côté aval de l'unité de refroidissement (4) dans le passage de retour (20).
